# EUROPEAN PATENT APPLICATION

(11) **EP 0 676 262 A1**
(43) Date of publication of application: **11.10.1995**
(21) Application number: 95301588.0
(22) Date of filing: 10.03.1995
(51) Int. Cl.: B26D 7/20, B26D 1/38

(54) **Rotary panel cutter**

(30) Priority: 10.03.1994 US 208973
(71) Applicant: F.L. Smithe Machine Company Inc., Duncansville Pennsylvania 16635 (US)
(72) Inventor: Lambert, Michael P., Altoona, Pennsylvania 16601 (US)
(74) Representative: Thomas, Roger Tamlyn

(57) **Abstract**

A knife cylinder carrying a cutter die or knife is rotatably supported on the lower bridge of a rotary panel cutter for an envelope machine. A back-up bar is adjustably positioned on the bridge opposite the knife cylinder. The back-up anvil is selected from one of a number of anvils adapted for mounting on the panel cutter including a rotatable anvil cylinder and a fixed anvil bar. To convert the panel cutter from a rotatable anvil to a fixed bar, the rotatable anvil is removed from a support on the upper bridge and an arm member is connected to the upper bridge above the knife cylinder. A support block is bolted to the bottom of the arm member. A groove cut in the support block receives a fixed anvil bar of a preselected cross-sectional configuration corresponding to the configuration of the groove. To provide progressive cutting of the sheet as it is fed between the anvil bar and the cutting knife the anvil bar is skewed at an angle with respect to the longitudinal axis of the knife cylinder. The groove in the bar is cut on a radius so that when the bar is clamped in the support block the bar is distorted to conform to the arcuate configuration of the groove. With the bar distorted and skewed at an angle relative to the knife edge, the bar is maintained along its length the same distance from the knife edge.

## Description

### BACKGROUND OF THE INVENTION

### 1. Field of the Invention

This invention relates to a rotary panel cutter and more particularly to a method and apparatus for positioning opposite a knife cylinder on the panel cutter either a rotary anvil or a fixed bar anvil to sever blanks from sheet material or to cut profiles in the sheet material.

### 2. Description of the Prior Art

In the fabrication of envelopes as disclosed in U.S. Patent No. 3,380,327, envelope blanks are cut in a desired configuration from a web of sheet material fed through an envelope machine or precut blanks are fed through the envelope machine. Once the basic configuration of the envelope blank is cut from the web, the blanks are advanced through a rotary panel cutter that cuts one or more openings or profiles in the body of the envelope blank.

In one embodiment the rotatable cutter shaft and the anvil are positioned at an angle of 90° to the longitudinal feed path of the web, as illustrated in U.S. Patent No. 3,728,918. In this embodiment the longitudinal axes of the stationary anvil cylinder and the rotatable cutter shaft are positioned in spaced parallel relationship so that the surface of the anvil cylinder and the edges of the die or cutter knife are maintained a preselected distance apart.

In U.S. Patent No. 3,728,918, the die cutter knife cuts a rectangularly shaped panel from the web. The cutter knife has a pair of knife edges that are positioned in spaced relation and parallel to the longitudinal axis of the knife cylinder and a pair of knife edges connected to the ends of the longitudinal edges and extending perpendicular thereto. Once the panel is cut from the web a vacuum system on the knife cylinder engages the cut panel to remove it from the moving web.

U.S. Patent No. 5,109,741 discloses a knife roller having knives for cutting out a window. The window cut out or scrap of paper is held by suction on the periphery of the knife roller and is eventually released into a suction funnel while the envelope blank is further transported from the knife roller.

German Patent No. 27 50 530 is a further example of a rotary panel cutter in which the anvil cylinder and the knife cylinder are positioned in spaced parallel relation. The knife cylinder carries a window cutter having a rectangular profile in which the edges of the cutter are perpendicular and parallel to the longitudinal axes of the respective cylinders. The panel cutter also includes adjustment means for positioning the anvil cylinder with respect to the knife cylinder where a preload force acts on the bearings for both the anvil cylinder and the knife cylinder. U.S. Patent No. 4,359,919 discloses a similar arrangement in a rotary panel cutter for adjustably positioning the back-up roll with respect to the cutter roll.

With the above described rotary panel cutters, the cutting knife on the knife cylinder is a machined part having a preselected profile for cutting an opening of a desired configuration in the web or envelope blank. The conventional machined dies are expensive to manufacture and, therefore, the die configuration is confined to the conventional rectangular or elliptical profile. The conventionally machined cutter die is not conducive to irregular configurations. To meet the demand for more elaborate profiles to be cut from a web or envelope blank, metal foil-type cutter dies have been developed. A metal foil cutter die is formed by an etching process and is substantially less expensive to manufacture than a conventionally machined cutter die. The metal foil includes raised edge on a thin sheet of metal which is magnetically secured to the surface of the cutter cylinder. The raised edge has a configuration corresponding to the profile to be cut from the web. An example of a cutter cylinder that utilizes a metal foil is disclosed in U.S. Patent No. 4,537,588.

It is also known in rotary panel cutters to position the anvil roller or cylinder skewed at an angle, for example 1° to 3°, with respect to the longitudinal axis of the knife cylinder. With this arrangement, the knife edges do not cut on a straight line along the axis of the cutting cylinder as it rotates relative to the anvil cylinder. The knife edge executes a progressive cut which serves to prevent shredding of the web in cutting out a profile.

U.S. Patent No. 3,977,283 discloses a rotary panel cutter in which the cutter die knife blade has side edges that are perpendicular to the longitudinal axis of the cutter shaft and leading and trailing edge portions that are not parallel to the longitudinal axis of the cutter shaft. In addition, the cutter shaft is mounted in the machine frame with its longitudinal axis at an angle other than 90° with the feed path of the web.

In German Patent No. 26 48 073, the axis of the anvil crosses the axis of the knife cylinder at an angle between 1° to 3°. In addition, the anvil is provided with a hyperbolically ground cylindrical surface.

While it is the conventional practice to utilize cylindrical back-up rolls or anvils in a rotary panel cutter as disclosed in U.S. Patent Nos. 3,728,918 and 3,977,283 as discussed above, it is also known to utilize bar-type rollers which are clamped in place within holders opposite the knife cylinder. As illustrated in U.K. Patent No. 2 078 154 and German Patent No. 29 00 994 a knife cylinder is positioned oppositely a stationary anvil. The anvil is a ceramic cylindrical bar which is retained in a holder by a clamping bar. After a period of use the surface of the anvil bar begins to wear. The screws holding the clamp in place are loosened to permit the bar to be rotated and thereby position a new surface opposite the cutting knives. The clamp screws are tightened to stationarily maintain the cylindrical bar in the holder. The anvil bar does not rotate.

U.S. Patent No. 4,301,701 also discloses a stationary bar-type anvil in a rotary cutter panel. In this example, the holder for the anvil bar includes a recessed portion. The bar is positioned in the recessed portion and is located therein by a bed of cured resin and retained by clamping blocks. This eliminates the need for machining the holder to include a machined groove that has a configuration corresponding to the configuration of the back-up bar or roller. The back-up bar or roller disclosed in U.S. Patent No. 4,301,701 is retained in the holder at an angle of approximately 1° with respect to the longitudinal axis of the holder which is parallel to the longitudinal axis of the knife cylinder. The back-up bar is retained by the cured resin within the holder to engage helically around the cutting cylinder which carries the shaping tool.

While it is known to adjustably support the back-up anvil or cylinder of a rotary panel cutter oppositely the cutting cylinder, a number of arrangements have been utilized for the back-up anvil. Each of the known embodiments of the back-up anvil require a specific support mechanism for attachment to the panel cutter opposite the cutting cylinder. In some applications it is desirable to utilize a cylindrical anvil that is rotatable and/or driven while in other instances, it is desirable to position a fixed back-up anvil in a skewed relationship to the knife cylinder. In an effort to reduce the complexity of the support for the back-up anvil, bars clamped in adjustable holders have been used. Therefore, there is need in a rotary panel cutter for apparatus to support either a back-up bar or cylindrical anvil, as desired on the rotary panel cutter. The connection must be universally adaptable to receive a number of different types of back-up bars or anvils so that conversion of one type of anvil can be made for another without requiring substantial modifications to the panel cutter to support the respective anvil.

### SUMMARY OF THE INVENTION

In accordance with the present invention there is provided a rotary panel cutter that includes a machine frame. An upper bridge and a lower bridge are connected to the machine frame. A knife cylinder is rotatably supported in the lower bridge. Anvil means is supported in the upper bridge for backing-up the knife cylinder. The anvil means includes a selected one of a fixed or rotatable cylinder and a bar of a preselected configuration including a cylindrical bar and a square bar. The anvil means is maintained on the upper bridge a preselected distance from the knife cylinder. Support means releasably connects the anvil means to the upper bridge to permit replacement of the anvil means on the upper bridge with a preselected one of the cylinder, the cylindrical bar and the square bar.

Further in accordance with the present invention there is provided a method for supporting a rotary panel cutter in a machine frame comprising the steps of securing upper and lower bridges to a machine frame. A knife cylinder is rotatably supported in the lower bridge. An anvil cylinder is rotatably supported on the upper bridge to back-up the knife cylinder. The position of the anvil cylinder on the upper bridge is adjusted to maintain the anvil cylinder in a preselected position relative to the knife cylinder. The anvil cylinder is replaced on the upper bridge with a back-up bar. The back-up bar is maintained fixed on the upper bridge in a preselected position relative to the knife cylinder.

Additionally, the present invention is directed to a rotary panel cutter for an envelope machine that includes an envelope machine frame. Upper and lower bridges are secured to the machine frame. A knife cylinder is rotatably supported in the lower bridge. Support means is mounted on the upper bridge for receiving an anvil holder in a preselected position opposite the knife cylinder. An anvil bar is provided having a preselected cross-sectional configuration. Means is provided for clamping the anvil bar in a fixed position on the anvil holder a preselected distance from the surface of the knife cylinder to back-up the knife cylinder as sheet material is fed between the knife cylinder and the anvil bar.

Additionally in accordance with the present invention, there is provided apparatus for backing-up a knife cylinder on a rotary panel cutter that includes a machine frame for rotatably supporting a knife cylinder. A bar holder has a longitudinal axis. A radial groove of a preselected radius is cut in the bar holder and extends on the longitudinal axis. A longitudinal bar is positioned in the radial groove. Clamping means secures the bar in the groove to conform the bar to the radial configuration of the groove. Support means secures the bar holder to the machine frame to position the bar holder longitudinal axis at a preselected angle with respect to the knife cylinder. The surface of the bar extends in an arcuate path maintained a preselected distance from the surface of the knife cylinder the length of the bar.

Additionally, the present invention is directed to an anvil for a rotary panel cutter that includes an anvil holder having a longitudinal axis. A groove extends in the anvil holder on the longitudinal axis and has a preselected cross-sectional configuration. The groove is cut along a radial path in the anvil holder. A bar has a longitudinal axis and a preselected cross-sectional configuration corresponding to the cross-sectional configuration of the groove. Means is further provided for releasably clamping the bar in the groove to conform to the radial path of the groove.

### Brief Description of the Drawings

Figure 1 is a schematic illustration in side elevation of a rotary panel cutter for an envelope machine, illustrating a cutting cylinder rotatably supported opposite an anvil bar mounted on the panel cutter to permit conversion to another type of back-up anvil.

Figure 2 is an enlarged schematic view in side elevation of the support frame for releasably mounting an anvil holder in the upper bridge of a rotary panel cutter.

Figure 3 is a view in side elevation of the support frame shown in Figure 2, illustrating an anvil holder having the configuration to receive a fixed bar having a square cross-sectional configuration.

Figure 4 is a fragmentary schematic view in side elevation of the anvil holder, illustrating a square anvil bar having chamfered corners retained by clamps in the holder recess.

Figure 5 is a view similar to Figure 4 illustrating a round anvil bar clamped within the holder.

Figure 6 is a fragmentary view in side elevation of the anvil holder taken along line VI-VI of Figure 4, illustrating the clamp for releasably securing the anvil bar in the holder.

Figure 7 is an enlarged fragmentary schematic illustration of the anvil holder with a round bar retained in position opposite the cutting cylinder having a foil-type cutter on the surface thereof.

Figure 8 is a schematic plan view of the anvil holder and cutting cylinder, illustrating the anvil holder maintaining the fixed anvil bar extending in overlying parallel relationship with the longitudinal axis of the cutting cylinder.

Figure 9 is an end view of the anvil bar shown in Figure 8, illustrating the anvil holder retained in parallel relation with the cutting cylinder.

Figure 10 is a view in side elevation of the anvil holder and cutting cylinder shown in Figure 8, illustrating the fixed bar extending parallel to the cutting cylinder.

Figure 11 is a diagrammatic illustration of an arcuate groove cut along a radial path in the anvil holder in accordance with the present invention.

Figure 12 is a schematic plan view of the anvil holder and bar skewed at an angle with respect to the longitudinal axis of the cutting cylinder.

Figure 13 is a schematic view in side elevation of the anvil bar, holder and knife cylinder shown in Figure 12.

Figure 14 is a schematic view in side elevation, diagrammatically illustrating the position of the anvil bar distorted by the groove in the anvil holder shown in Figure 11 to extend along the knife cylinder a fixed distance therefrom in a skewed position relative to the knife cylinder.

Figure 15 is a schematic plan view of the cylinders on opposite sides of the knife cylinder in an envelope machine, illustrating the cylinders on either side of the knife cylinder canted so as to turn the sheet material at an angle relative to the longitudinal feed path as the sheet material approaches and leaves the knife cylinder.

### DESCRIPTION OF THE PREFERRED EMBODIMENTS

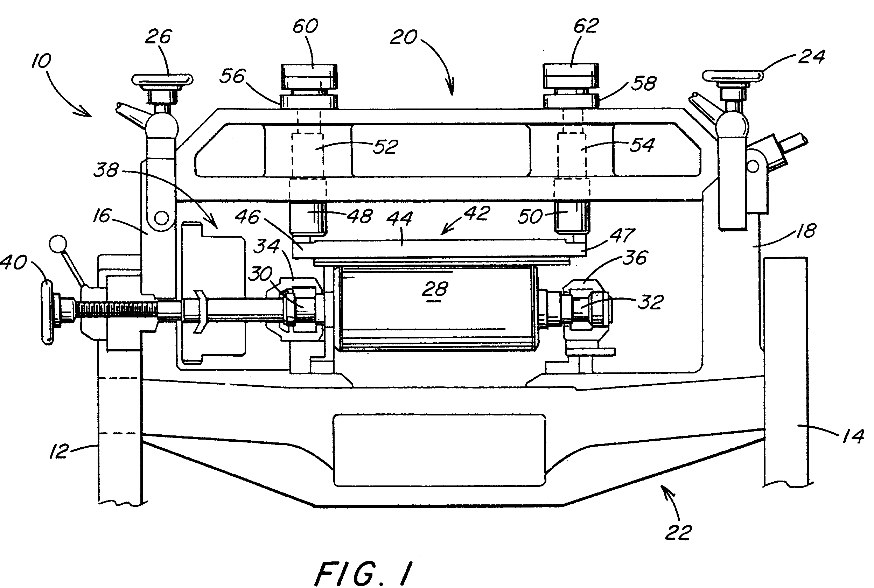

Referring to the drawings and particularly to Figure 1, there is illustrated a rotary panel cutter generally designated by the numeral 10 forming part of an envelope making machine (not shown). As well known in the art, the rotary panel cutter is operable to sever individual envelope blanks from a web of sheet material or cut from the web or pre-cut envelope blanks profiles, such as the windows, in the blanks. The openings or profiles cut from the material may be of a conventional rectangular or elliptical shape, as well as, a very elaborate profiles cut in the blank. With the present invention, the rotary panel cutter 10 is operable for conversion from one type of cutting operation to another and to expand the versatility of the panel cutter 10.

The rotary panel cutter 10 is positioned between a pair of side frames 12 and 14 of the envelope machine. The panel cutter 10 includes frame members 16 and 18 which are secured to the respective machine side frames 12 and 14. An upper bridge generally designated by the numeral 20 is releasably connected at one end portion by a clamp mechanism 24 to frame member 18 and is releasably clamped at the opposite end portion by a clamp mechanism 26 to the machine frame 16. By releasing the clamp mechanism 26 the upper bridge 20 is pivotally raised on the frame member 18. A knife or die cylinder 28 includes shaft end portions 30 and 32 nonrotatably connected to the cylinder 28. The shaft end portions 30 and 32 are rotatably mounted in pillow blocktype bearings 34 and 36 which are, in turn, mounted on the lower bridge 22. The shaft end portion 30 extends from the bearings 34 into engagement with a gear mechanism generally designated by the numeral 38. The gear mechanism 38 is drivingly connected to an external drive means (not shown). With this arrangement, the knife cylinder 28 is rotated at a preselected speed. A register mechanism 40 is drivingly connected through the gear mechanism 38 to the shaft end portion 30 to rotate the shaft 30 for register of the panel cutting knives on the cylinder 28 with the envelope blanks or web of sheet material.

The knife cylinder 28 is positioned beneath a back-up anvil generally designated by the numeral 42 which is mounted in the upper bridge 20. As will be explained later in greater detail, the back-up anvil 42 is maintained a preselected distance from the edges of the cutting knife on the cylinder 28. The knife cylinder 28 is provided with vacuum means (not shown) to engage the sheet of blank material on the periphery of the rotating cylinder 28 and convey the sheet through the nip between the cylinder 28 and the back-up anvil 42. The vacuum means maintains the sheet engaged to the surface of the cylinder 28 while the leading edge of the blank passes through the nip between the back-up anvil 42 and the cylinder 28 and to release the leading edge of the blank as it passes a preselected distance beyond the nip.

When the sheet material is in overlying relation with the knife edges of the cutter knife, the sheet is severed (cuttoff), trimmed, or a panel of a preselected outline is cut out of the sheet of blank material. The panel severed from the sheet remains engaged to the surface of the knife cylinder 28 by the vacuum means. When the cutter cylinder rotates to a preselected position the negative pressure maintaining the cut panel on the cylinder 28 is released and a positive pressure is applied to dislodge the cut panel from the cylinder 28. The details of the vacuum means for the knife cylinder 28 are beyond the scope of the present invention and will not be discussed in detail herein. U.S. Patent No. 3,728,918 entitled "Rotatable Panel Cutter", issued April 24, 1973, discloses the details of the vacuum means for the knife cylinder 28 and is incorporated herein by reference.

The back-up anvil 42 shown in Figure 1 is a fixed bar type anvil and in accordance with the present invention may be replaced for a rotatable anvil roll as disclosed in U.S. Patent No. 3,728,918. The anvil 42 shown in Figure 1 includes an anvil holder 44 that extends beyond the length of the knife cylinder 28 and includes end portions 46 and 47 that are connected to adjustment devices 48 and 50 respectively. The adjustment devices 48 and 50 include upper threaded end portions 52 and 54 which extend through openings in the upper bridge 20. The threaded end portions 52 and 54 are threadedly received within adjustment collars 56 and 58 which are rotatably supported on the upper bridge 20.

Rotation of the collars 56 and 58 in a preselected direction raises and lowers the adjustment devices 48 and 50 on the upper bridge 20 relative to the knife cylinder 28. Thus, by rotating the collars 56 and 58 the back-up anvil 42 is vertically moved on the upper bridge 20 to position the anvil 42 a preselected distance from the edges of the cutter knife on the cylinder 28. Once the anvil 42 has been moved to the desired position relative to the cylinder 28 on the upper bridge 20, locknuts 60 and 62 are tightened on the threaded end portions 52 and 54 to maintain the desired vertical position of the adjustment devices 48 and 50 to, in turn, maintain the back-up anvil 42 spaced a preselected distance from the knife cylinder 28.

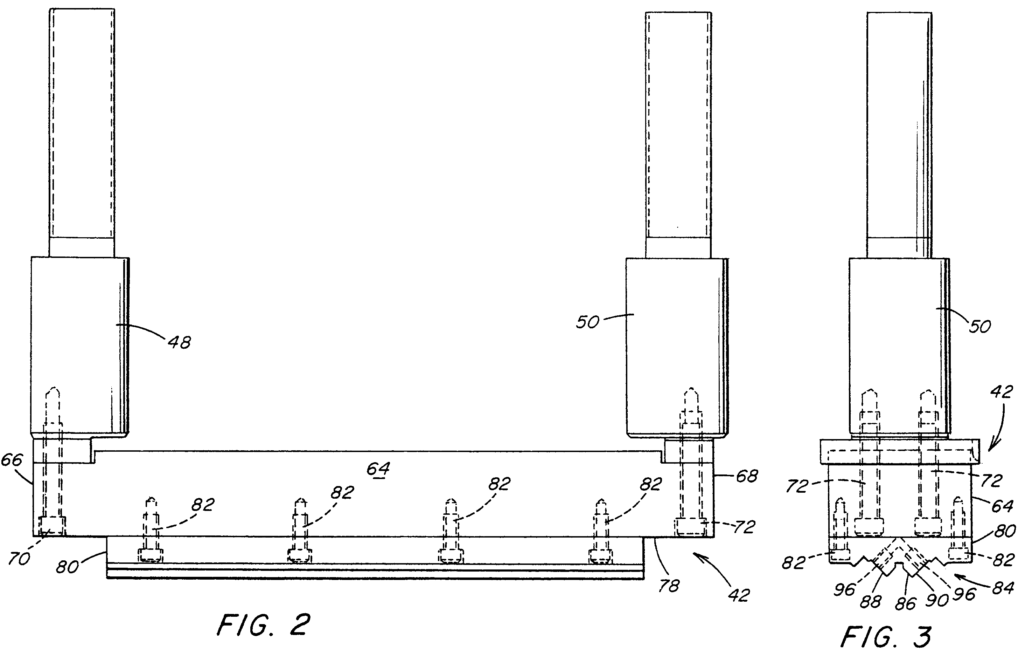

Now referring to Figures 2 and 3, there is illustrated in greater detail the back-up anvil 42 for mounting on the upper bridge 20. The anvil 42 shown in Figure 2 includes a horizontal arm member 64 having end portions 66 and 68 which are bored to receive bolts 70 and 72. The bolts 70 and 72 extend through the arm end portions 66 and 68 into engagement with the adjustment devices 48 and 50. In this manner, the anvil arm member 64 is rigidly connected to the adjustment devices 48 and 50 so that when they are moved on the upper bridge 20 the arm member 64 moves with them.

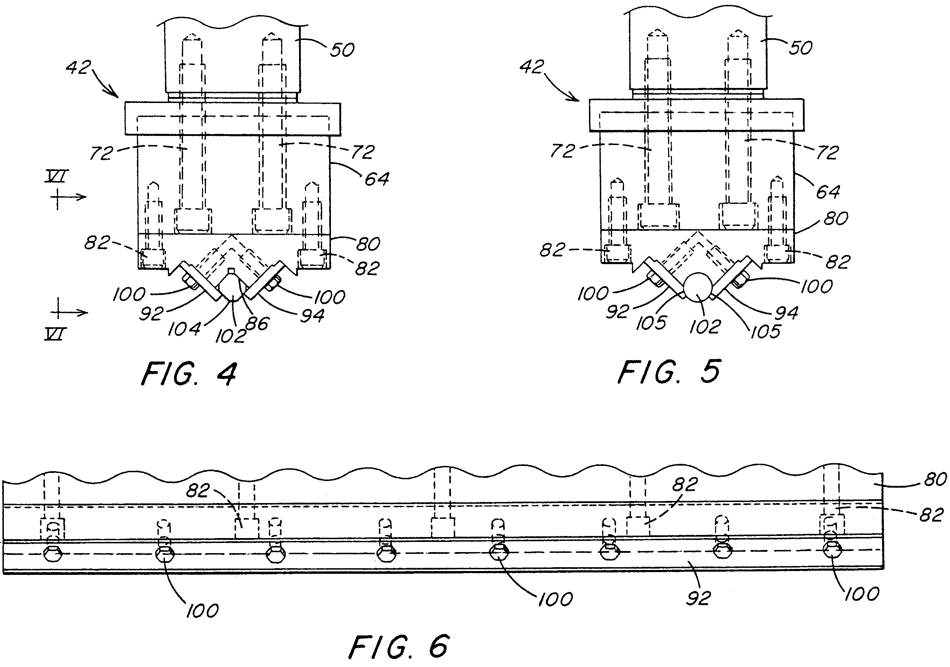

The arm member 64 includes a lower horizontal surface 78 for receiving a longitudinally extending support block 80 having a surface for seating against the arm surface 78. The support block 80 is secured to the arm member 64 by a plurality of bolts 82. The support block 80 includes an opposite surface generally designated by the numeral 84 in Figure 3 having a groove 86 cut into the surface 84 and extending the length of the block 80. The groove 86 has a preselected configuration corresponding to the cross-sectional configuration of the anvil bar positioned in the groove 86. For example, in Figure 3 the groove 86 includes right angle surfaces for receiving an anvil bar having a square or rectangular cross-section. In the alternative as shown in Figure 5, the groove 86 has a circular cross-sectional configuration for receiving an anvil bar having a circular cross-section.

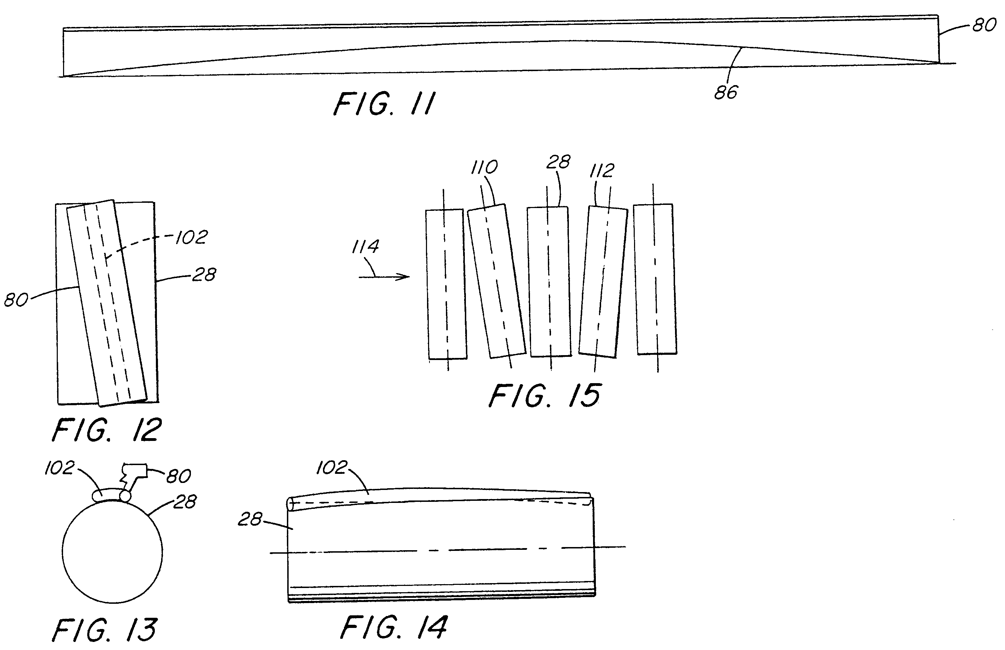

In accordance with the present invention, the groove 86 cut in the support block 80 for both the square or circular anvil bar is cut on a very large radius as diametrically illustrated in Figure 11. The bottom of the groove 86 follows an arcuate path the full length of the support block 80. Accordingly, the groove 86 extending the length of the block 80 increases in depth as it extends toward the center of the block 80. It should be understood that the groove 86 illustrated in Figure 11 is exaggerated in scale insofar as the radius of the arc to clearly illustrate the contour of the groove. The groove 86 is on an arc that is so large that it is hardly distinguishable by the human eye when looking at the groove 86. Figure 11 schematically illustrates the arcuate path followed by the groove 86 and is not to scale.

On both sides of the groove 86 as seen in Figure 3, the surface of the block 80 is provided with ledges 88 and 90 for receiving clamp bars 92 and 94 shown in Figure 4. The ledges 88 and 90 are provided with threaded bores 96. The clamp bars 92 and 94 are provided with sockets 98. The cap screws 100 extend through the sockets 98 with the clamp bars 92 and 94 positioned on the ledges 88 and 90 to engage the threaded bores 96 of the support block 80 to retain the clamp bars 92 and 94 on the support block 80.

As seen in Figure 4, the clamp bars 92 and 94 retain an anvil bar 102 having a square cross-sectional configuration within the square groove 86. In a further embodiment, the anvil bar 102 shown in Figure 4 is provided with chamfered edges 104 at the four corners of the bar 102 for increasing the efficiency of the cutting operation. The clamp bars 92 and 94 extend into overlying relation with the surface of the bar 102 to securely retain the bar 102 seated within the groove 86. Preferably, the anvil bar 102 is fabricated of a abrasive resistant material, such as carbide or ceramic.

The anvil bar 102, prior to insertion within the groove 86, is straight and is not curved. When the bar 102 is clamped within the groove 86 the cap screws 100 are tightened within the sockets 98 so that the clamp bars 92 and 94 compress the bar 102 in the groove 86. The bar 102 is compressed to the extent that the bar 102 conforms to the arcuate configuration of the groove 86 so it follows the arcuate path which extends on a very large radius as diagrammatically illustrated in Figure 11.

Figure 5 illustrates the embodiment of the anvil bar 102 having a circular cross-section within the groove 86. The groove 86 has a radius complimentary with the cross-sectional configuration to receive the circular anvil bar 102. Then when the clamp bars 92 and 94 are tightened on the ledges 88 and 90 of the block 80, the circular bar 102 is distorted or conformed to the configuration of the groove 86. To facilitate a secure engagement of the circular anvil bar 102 within the groove 86, the clamp bars 92 and 94, as shown in Figure 5, are provided with recessed areas 105 to receive the surface of the circular bar 102 and maintain the bar 102 fully seated along its entire length within the arcuate groove 86.

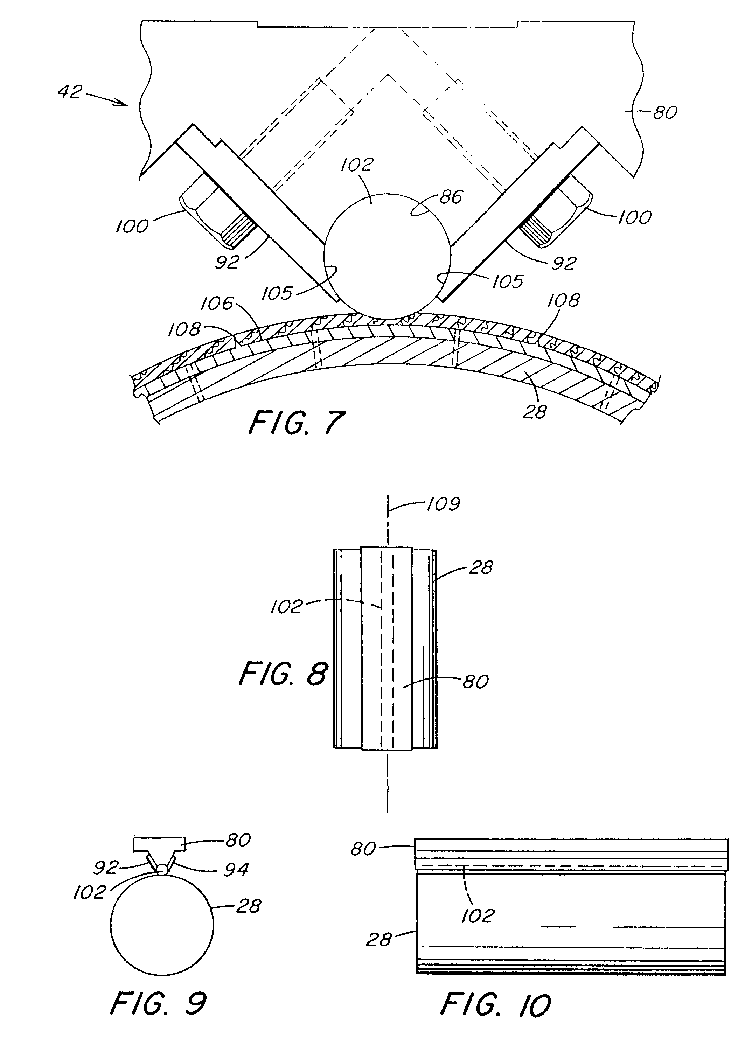

The embodiment of the back-up anvil 42 for retaining a circular anvil bar 102 fixed within the arcuate groove 86 of the anvil holder or support block 80 is shown in Figure 7. In addition, the relative position of the surface of the circular anvil bar 102 with respect to the sheet material positioned in the nip between the bar 102 and the knife cylinder 28 is shown in Figure 7. The knife cylinder 28 is provided with a cutting knife 106 having knife edge 108. The cutting knife 106 is a foil-type knife formed by a thin plate with the knife edge 108 forming a preselected pattern to be cut from the sheet material. The pattern is cut from the sheet material as it passes between the cylinder 28 and the anvil bar 102. The opening cut in the sheet has an outline corresponding to the outline of the knife edge 108.

As known in the art, foil-type cutters on knife cylinders are useful when very elaborate profiles are to be cut from the sheet. The knife edge 108 is formed by an etching process so that the foil cutting knife is relatively inexpensive to fabricate in comparison with a conventional cutting knife which is machined to cut a standard rectangular or elliptical window in the sheet. A conventionally machined cutting knife has a greater life than a foil-type cutting knife but it is much more expensive to make and is not efficient in cutting detailed profiles. With a foil-type cutting knife 106, as shown in Figure 7, the metal foil is magnetically retained on the curved surface of the cylinder 28.

Now referring to Figures 8-10, there is illustrated the embodiment of a rotary panel cutter in which the longitudinal axis of the anvil bar 102 is positioned parallel to the longitudinal axis 109 of the knife cylinder 28. With this arrangement, the cutting edges of the knife on the cylinder 28 cut in a line overlying longitudinal axes of the cutter bar 102 and the knife cylinder 28. However, in order to provide progressive cutting of the panel from the blank of the sheet material, the sheet material must be canted or angled from the longitudinal feed path. This is accomplished as shown in Figure 15 by canting feed cylinders 110 and 112 relative to the knife cylinder 28 positioned therebetween.

For a direction of feed indicated by the directional arrow 114 in Figure 15, the feed cylinder 112 is canted at the preselected angle relative to the knife cylinder 28 so that the feed path of the sheet material is diverted a preselected angle from the direction indicated by arrow 114. As the sheet material passes between the knife cylinder 28 and the anvil bar 102, the material is angularly oriented so as to provide the desired progressive cutting. Once the cut sheet material advances past the knife cylinder 28 the downstream feed cylinder 112, being also canted with respect to the cylinder 28, redirects the sheet material to advance in the direction of arrow 114.

To provide for progressive cutting of a panel in the sheet material where the feed cylinders 110 and 112 are in parallel alignment with the knife cylinder 28, the anvil bar 102 must be skewed or oriented at a preselected angle with respect to the longitudinal axis of the knife cylinder 28. This arrangement is shown in Figures 12-14. In this embodiment, the anvil bar 102 must be distorted by clamping it in the holder having the arcuate groove 86 as discussed above. Because of the circular configuration of the knife cylinder 28 when the anvil bar 102 is canted or skewed at an angle, for example 1.5°, from the longitudinal axis of the knife cylinder 28, the surface of the back-up bar 102 must follow the contour of the knife cylinder 28 at that angle of orientation. The surface of the anvil bar 102 must be maintained a preselected distance from the surface of the knife cylinder 28, as well as the knife edges, along the entire length of the anvil bar 102. This is necessary so that the anvil bar provides the necessary backing support for the sheet material as the panel is cut from the material.

With the present invention, the back-up anvil 42 is efficiently assembled to perform the desired panel cutting operations using a wide variety of dies or cutting knives on the knife cylinder 28. If a rotatable anvil roll is desired to backup the knife cylinder 28, as disclosed in U.S. Patent No. 3,782,918, the arm member 64 shown in Figure 2 is removed with the adjustment devices 48 and 50 and an anvil roll as disclosed in said patent is rotatably mounted on the upper bridge 20.

For those cutting operations in which a fixed anvil is desired, the arm member 54 is installed with adjusting devices 48 and 50. The configuration of the anvil bars is selective as shown in Figures 2-6. A bar having a square configuration with or without chamfered edges 104, as shown in Figure 4, or a circular bar, as shown in Figure 5, may be mounted on the arm member 64. Depending upon the type of fixed anvil bar that is utilized, the support block 80 having the configuration corresponding to the desired bar is installed on the arm member 64.

Also it should be understood that in those instances where the anvil bar is maintained at an angle skewed from the longitudinal axis of the knife cylinder 28, the support block 80 is mounted at the desired angle on the support arm 64. Thus, when the support arm is connected with the adjusting devices 48 and 50, the longitudinal axis of the anvil bar is angularly oriented with respect to the knife cylinder to provide the desired progressive cutting of the panel.

With the present invention, a conventional rotary panel cutter can be efficiently converted to utilize a number of different types of back-up anvils to meet the requirements for the desired cutting operation. The selected back-up anvil can be used with either a conventional machined knife of a rectangular or elliptical configuration or a foil-type cutter having a elaborate profile. In both instances, the panel cutter may utilize a conventional rotatable back-up anvil roll or a fixed bar type back-up anvil.

## Claims

1. A rotary panel cutter comprising, a machine frame, an upper bridge and a lower bridge, said upper and lower bridges secured to said machine frame, a knife cylinder rotatably supported in said lower bridge, anvil means supported in said upper bridge for backing-up said knife cylinder, said anvil means including a selected one of a cylinder and a bar of a preselected configuration, said anvil means maintained on said upper bridge a preselected distance from said knife cylinder, and support means for releasably connecting said anvil means to said upper bridge to permit replacement of said anvil means on said upper bridge with a preselected one of said cylinder, and said bar.

2. A rotary panel cutter as set forth in claim 1, in which said anvil means includes said cylinder rotatably supported in said upper bridge.

3. A rotary panel cutter as set forth in claim 1, in which said anvil means includes said bar stationarily fixed to said support means, and adjustment means for moving said support means on said upper bridge to position the surface of said bar a preselected distance from the surface of said knife cylinder.

4. A rotary panel cutter as set forth in claim lor 3 in which said support means includes a support block having a longitudinally extending groove cut in said support block, said groove having a preselected cross sectional configuration corresponding to the cross sectional configuration of said bar, said groove extending along a radial path the length of said support block, and means for clamping said bar in said groove to compress said bar into a configuration conforming to the radial path of said groove.

5. A method for supporting a rotary panel cutter in a machine frame comprising the steps of, securing upper and lower bridges to a machine frame, rotatably supporting a knife cylinder in the lower bridge, supporting an anvil cylinder on the upper bridge to back-up the knife cylinder, adjusting the position of the anvil cylinder on the upper bridge to maintain the anvil cylinder in a preselected position relative to the knife cylinder, replacing the anvil cylinder on the upper bridge with a back-up bar, and maintaining the back-up bar fixed on the upper bridge in a preselected position relative to the knife cylinder.

6. A method for supporting a rotary panel cutter as set forth in claim 5 which includes positioning a back-up bar of a preselected cross sectional configuration on the upper bridge.

7. A method for supporting a rotary panel cutter as set forth in claim 5 or 6 which includes positioning the back-up bar at an angle skewed from a feed path through the panel cutter for progressive cutting of sheet material by the knife cylinder.

8. A method for supporting a rotary panel cutter as set forth in claim 5 or 6 which includes positioning the back-up bar at an angle skewed from the longitudinal axis of the knife cylinder, and deforming the back-up bar along the length thereof so that the surface of the back-up bar is maintained in a preselected distance from the surface of the knife cylinder skewed at an angle relative to the back-up bar.

9. A rotary panel cutter for an envelope machine comprising, a machine frame, an upper bridge and a lower bridge, said upper and lower bridges secured to said machine frame, an anvil holder, support means mounted on said upper bridge for receiving said anvil holder in a preselected position opposite said knife cylinder, an anvil bar having a preselected cross-sectional configuration, and means for clamping said anvil bar in a fixed position on said anvil holder a preselected distance from the surface of said knife cylinder to back-up said knife cylinder as sheet material is fed between said knife cylinder and said anvil bar.

10. A rotary panel cutter as set forth in claim 9 which includes means for positioning said anvil holder on said support means for aligning said anvil bar at an angle skewed from the longitudinal axis of said knife cylinder.

11. A rotary panel cutter as set forth in claim 9 in which said anvil holder includes a longitudinally extending groove, said groove extending on a radius along the length of said groove, and said anvil bar positioned in said groove to conform to the configuration of the groove by said clamping means.

12. A rotary panel cutter as set forth in claim 11 in which said anvil bar has a preselected cross sectional configuration, said groove having a cross sectional configuration corresponding to the cross sectional configuration of said anvil bar, and means for releasably connecting said anvil bar in said groove.

13. Apparatus for backing-up a knife cylinder on a rotary panel cutter comprising, a machine frame for rotatably supporting a knife cylinder, a bar holder having a longitudinal axis and a radial groove of a preselected radius cut in said bar holder and extending on said longitudinal axis, a longitudinal bar positioned in said radial groove, clamping means for securing said bar in said groove to conform said bar to the radial configuration of said groove, and support means for securing said bar holder to said machine frame to position said bar holder longitudinal axis at a preselected angle with respect to said knife cylinder with the surface of said bar extending in an arcuate path maintained a preselected distance from the surface of the knife cylinder the length of said bar.

14. Apparatus for backing-up a knife cylinder as set forth in claim 13 which includes said bar holder having a groove with a circular cross section, said bar having a circular cross section conforming to the circular cross section of said groove, and said clamping means deforming said circular bar in said circular groove to conform to the radial configuration of said groove.

15. Apparatus for backing-up a knife cylinder as set forth in claim 13 which includes said bar holder having a groove with a square cross section, said bar having a square cross section conforming to the square cross section of said groove, and said clamping means deforming said square bar in said square groove to conform to the radial configuration of said groove.

16. Apparatus for backing-up a knife cylinder as set forth in claim 15 which includes said bar having a square cross section forming corners on said bar, and said corners having chamfered edges.

17. An anvil for a rotary panel cutter comprising, an anvil holder having a longitudinal axis, a groove in said anvil holder extending on said longitudinal axis and having a preselected cross-sectional configuration, said groove cut along a radial path in said anvil holder, an anvil including a bar having a longitudinal axis and a preselected cross-sectional configuration corresponding to the cross-sectional configuration of said groove, and means for releasably clamping said bar in said groove to conform to the radial path of said groove.

18. An anvil for a rotary panel cutter as set forth in claim 17 in which, said bar and said groove have complementary circular cross sections.

19. An anvil for a rotary panel cutter as set forth in claim 17 in which, said bar and said groove have complementary square cross sections.

20. An anvil for a rotary panel cutter as set forth in claim 17 in which, said bar when clamped in said groove is deformed from a straight-line configuration to an arcuate configuration conforming to the radial path of said groove.
